# FASCICULE DE BREVET EUROPEEN

(11) **EP 2 718 546 B1**
(45) Date de publication et mention de la délivrance du brevet: **01.02.2017**
(21) Numéro de dépôt: 12731122.3
(22) Date de dépôt: 06.06.2012
(51) Int. Cl.: F16C 27/04, F16C 19/26, F02C 7/28, F02C 7/06, F01D 25/18, F01D 25/16

(54) **TURBOMACHINE COMPORTANT UN PALIER FLOTTANT DE GUIDAGE D'UN ARBRE DE LA TURBOMACHINE**
TURBINENMOTOR MIT SCHWIMMENDEM LAGER ZUM STEUERN EINER WELLE DES TURBINENMOTORS
TURBINE ENGINE COMPRISING A FLOATING BEARING FOR GUIDING A SHAFT OF THE TURBINE ENGINE

(30) Priorité: 08.06.2011 FR 1154996
(43) Date de publication de la demande: 16.04.2014
(73) Titulaire: Safran Aircraft Engines, 75015 Paris (FR)
(72) Inventeur: MORREALE, Serge, F-77550 Moissy-Cramayel Cedex (FR); GILLE, Laurent, F-77550 Moissy-Cramayel Cedex (FR)
(74) Mandataire: Gevers & Orès
(86) Numéro de dépôt international: PCT/FR2012/051261
(87) Numéro de publication internationale: WO 2012/168649

(56) Documents cités:
- EP-A1- 1 564 397
- US-A1- 2006 233 479
- US-A1- 2008 190 093
- US-A1- 2009 297 083
- US-A1- 2010 111 681

## Description

La présente invention concerne le domaine des turbomachines et plus particulièrement un palier de guidage d'un arbre d'une turbomachine.

Les paliers de guidage utilisés dans une turbomachine comprennent une bague intérieure et une bague extérieure enserrant des organes roulants, par exemple des rouleaux. De manière classique, la bague extérieure est montée de manière solidaire sur une partie fixe de la turbomachine et la bague intérieure est montée de manière solidaire sur un arbre de la turbomachine, par exemple, par frettage. Le palier permet ainsi de guider l'arbre en rotation par rapport à la partie fixe de la turbomachine.

Dans certaines configurations, le palier est monté entre deux arbres rotatifs de la turbomachine. Ce type de palier est couramment désigné palier « interarbre », un tel palier étant par exemple connu de la demande de brevet FR 2 939 843 A1 et aussi de la demande de brevet US2008/0190093 A1 de la société SNECMA.

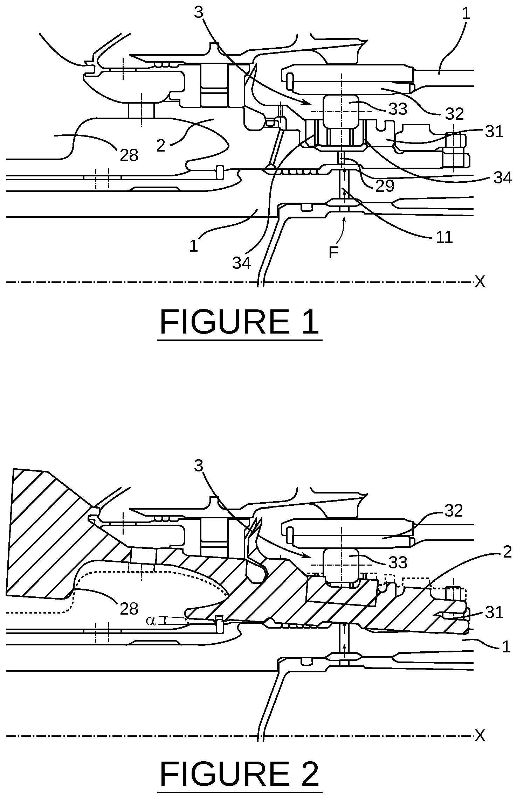

A titre d'exemple, en référence à la figure 1, un turboréacteur pour aéronef comporte de manière classique plusieurs arbres de turbine rotatifs dont un arbre haute pression 2 monté rotatif par rapport à un arbre basse pression 1 via un palier interarbre 3 comportant des rouleaux 33. Les arbres sont coaxiaux et s'étendent selon l'axe X du turboréacteur, l'arbre basse pression 1 étant monté intérieurement à l'arbre haute pression 2. L'arbre basse pression 1 comporte une extrémité aval qui comprend une goulotte de guidage venant envelopper l'extrémité aval de l'arbre haute pression 2 de manière à ce que le palier 3 soit placé dans la goulotte entre la surface extérieure de l'arbre haute pression 2 et la surface intérieure de l'arbre basse pression 1. Autrement dit, la bague extérieure 32 du palier interarbre 3 est solidaire d'une partie de l'arbre basse pression 1 tandis que la bague intérieure 31 du palier interarbre 3 est solidaire d'une partie de l'arbre haute pression 2, les rouleaux 33 du palier 3 étant enserrés par les bagues 31, 32. Dans cet exemple, la bague intérieure 31 est frettée sur l'arbre haute pression 2 de manière à empêcher toute translation et toute rotation de la bague intérieure 31 du palier 3 par rapport à l'arbre haute pression 2.

Le turboréacteur comporte par ailleurs des moyens d'amenée d'un flux d'huile de lubrification F pour lubrifier le palier de guidage 3 qui sont situés intérieurement à l'arbre basse pression 1. Dans cet exemple, les moyens d'amenée se présentent sous la forme de gicleurs mais il va de soi qu'ils pourraient se présenter sous des formes diverses. Pour lubrifier les rouleaux 33 du palier interarbre 3, la bague intérieure 31 comporte des canaux radiaux 34 permettant d'acheminer de l'huile de lubrification F depuis la surface intérieure de la bague intérieure 31 vers sa surface extérieure. Sous l'effet des forces centrifuges, le flux d'huile de lubrification F traverse successivement la paroi de l'arbre basse pression 1 via un orifice radial traversant 11, la paroi de l'arbre haute pression 2 via un orifice radial traversant 29 et enfin la bague intérieure 31 du palier 3 via des canaux radiaux traversants 34 pour atteindre les rouleaux 33 du palier 3.

En référence à la figure 1, l'arbre haute pression 2 comporte en amont des disques de turbine massifs 28 qui sont sensibles, d'une part, aux forces centrifuges du fait de leur masse et, d'autre part, aux dilatations thermiques du fait de leur proximité avec la chambre de combustion du turboréacteur. Comme la partie amont de l'arbre haute pression 2 est en contact avec les gaz chauds issus de la chambre de combustion et la partie aval est refroidie par un flux d'huile de lubrification, un gradient thermique, de l'ordre de 200°C, apparaît entre la partie amont et la partie aval de l'arbre haute pression 2.

Au cours du fonctionnement du turboréacteur, l'arbre haute pression 2 se déforme sous les effets conjugués des forces centrifuges et des dilatations thermiques. De manière classique, on dit que l'arbre haute pression 2 se « met en cône » étant donné que le diamètre de sa partie amont augmente tandis que son diamètre aval demeure constant comme représenté sur la figure 2. Autrement dit, la partie amont de l'arbre haute pression 2 pivote radialement d'un angle α comme représenté sur la figure 2.

La mise en cône de l'arbre haute pression 2 induit un défaut d'orientation de la bague intérieure 31 du palier 3 qui est montée solidaire de l'arbre haute pression 2 comme représenté sur la figure 2. Les bagues intérieure 31 et extérieure 32 du palier 3 n'étant plus parallèles, il en résulte des contraintes mécaniques au niveau des rouleaux 33 du palier 3 ainsi que des défauts de lubrification et de refroidissement.

Une solution immédiate pour éliminer cet inconvénient serait d'allonger la partie amont de l'arbre haute pression 2 afin de limiter son pivotement d'angle α. Cette solution est néanmoins à éviter car elle va à l'encontre des évolutions des turboréacteurs qui visent à réduire la masse des turboréacteurs ainsi que leur encombrement.

Afin d'éliminer au moins certains de ces inconvénients, l'invention propose une turbomachine comportant un palier qui s'affranchit des défauts d'orientation de l'arbre sur lequel il est monté.

L'invention concerne une turbomachine comportant au moins un arbre et au moins un palier de guidage en rotation dudit arbre autour d'un axe de la turbomachine, selon la revendication 1.

De manière avantageuse, le film fluide amortisseur permet d'amortir les défauts d'orientation de l'arbre au cours de son fonctionnement. Autrement dit, outre ses fonctions de lubrification et de refroidissement du palier de guidage, le film fluide d'amortissement permet de compenser et d'absorber les mouvements radiaux de l'arbre au cours de son fonctionnement. Les bagues du palier demeurent ainsi parallèles à tout instant ce qui permet une lubrification et un refroidissement optimal dudit palier. En outre, le film fluide amortisseur permet d'isoler thermiquement le palier de l'arbre.

De manière préférée, le film fluide amortisseur et les organes roulants du palier appartiennent à un même plan transversal défini par rapport à l'axe de la turbomachine.

De préférence, la turbomachine comporte des moyens d'étanchéité amont et aval agencés pour former une chambre d'amortissement délimitée radialement par la première bague et ledit arbre et longitudinalement par les moyens d'étanchéité amont et aval. La chambre d'amortissement permet de recevoir de l'huile de lubrification pour former le film fluide amortisseur entre la première bague et l'arbre.

De préférence encore, les moyens d'étanchéité amont et/ou aval se présentent sous la forme d'au moins un segment d'étanchéité annulaire. De préférence toujours, ledit arbre comporte au moins un logement radial agencé pour loger les moyens d'étanchéité amont et/ou aval. Cela permet de monter le palier sur l'arbre en déplaçant les moyens d'étanchéité dans les logements de l'arbre. Lorsque le logement est rempli d'huile de lubrification, la pression qu'elle génère plaque les moyens d'étanchéité sur les bords externes de leurs logements respectifs, tandis que la force centrifuge les plaque contre la bague intérieure du palier ce qui rend étanche la chambre d'amortissement et force l'huile à cheminer vers des sections de fuite organisées dans les moyens d'étanchéité, en général par un jeu calibré entre les extrémités de chaque segment.

De manière préférée, la première bague intérieure comportant une surface extérieure tournée vers les organes roulant du palier et une surface intérieure opposée à la surface extérieure, la surface intérieure de la première bague intérieure comporte au moins une gorge annulaire et, de préférence, une gorge annulaire aval et une gorge annulaire amont. Une gorge permet avantageusement de collecter l'huile de lubrification à la surface intérieure de la première bague intérieure pour permettre son introduction dans des canaux de la première bague.

De préférence, la surface intérieure de la première bague intérieure comportant au moins une gorge annulaire amont et une gorge annulaire aval, la surface intérieure de la première bague intérieure qui s'étend entre les gorges annulaires amont et aval est pleine. Autrement dit, la surface intérieure de la première bague intérieure est dénuée d'orifice entre ses extrémités aval et amont pour former la paroi extérieure d'une chambre d'amortissement sous le palier.

Selon un aspect de l'invention, la première bague intérieure comporte au moins un canal longitudinal interne s'étendant dans la première bague, des premiers canaux reliant le canal longitudinal à la surface intérieure de la première bague intérieure et des deuxièmes canaux reliant le canal longitudinal à la surface extérieure de la première bague intérieure. Un canal interne permet avantageusement de conduire l'huile collectée au niveau de la surface intérieure de la bague intérieure et de la répartir au niveau de la surface extérieure tout en permettant la formation d'une chambre d'amortissement sous le palier.

De manière préférée, les premiers canaux débouchent dans au moins une des gorges annulaires. Ainsi, l'huile collectée par la gorge annulaire est transmise au canal interne pour lubrifier et refroidir le palier. Par ailleurs, les deuxièmes canaux débouchent au niveau des organes roulants du palier, de préférence, en amont et en aval desdits organes roulants.

Selon un autre aspect de l'invention, la première bague intérieure comporte au moins des canaux de liaison s'étendant obliquement par rapport à un plan transversal défini par rapport à l'axe de la turbomachine, les canaux de liaison reliant la surface intérieure de la première bague intérieure à sa surface extérieure. Cela permet avantageusement de répartir l'huile de lubrification au niveau de la surface extérieure de la bague intérieure tout en permettant la formation d'une chambre d'amortissement sous le palier.

De manière préférée, la première bague comporte des moyens de solidarisation en rotation de la bague intérieure et dudit arbre, de préférence, des ergots ou des créneaux. Ainsi, la fiabilité de l'ensemble est améliorée tout en permettant un jeu radial entre le palier et l'arbre pour amortir tout défaut d'orientation de l'arbre.

Selon un aspect préféré, l'arbre comportant une baignoire principale annulaire formée radialement dans la surface intérieure de l'arbre et une baignoire auxiliaire annulaire formée radialement dans la surface intérieure de la baignoire principale, l'arbre comporte :
- des orifices d'alimentation du film fluide amortisseur qui relient la baignoire auxiliaire à la surface extérieure de l'arbre, et
- des orifices de lubrification du palier qui relient la baignoire principale à la surface extérieure de l'arbre.

De manière avantageuse, l'huile de lubrification alimente en premier le fluide amortisseur pour sécuriser son fonctionnement puis les canaux du palier pour le lubrifier.

De préférence, la turbomachine comportant un arbre de turbine basse pression et un arbre de turbine haute pression, la première bague est une bague intérieure de palier montée sur l'arbre de turbine haute pression.

L'invention concerne en outre un procédé d'alimentation en huile d'une turbomachine comportant au moins un arbre et au moins un palier de guidage en rotation dudit arbre autour d'un axe de la turbomachine, selon la revendication 9.

De manière avantageuse, l'alimentation du palier en huile est séquentielle pour assurer en priorité le fonctionnement du fluide amortisseur avant de lubrifier les organes roulants.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1 est une vue en coupe axiale d'un turboréacteur d'aéronef selon l'art antérieur ;
- la figure 2 est une vue en coupe axiale du turboréacteur de la figure 1 lors de la mise en cône de l'arbre haute pression du turboréacteur ;
- la figure 3 est une vue en coupe axiale d'un turboréacteur d'aéronef selon l'invention ;
- la figure 4 est une vue en coupe axiale rapprochée du palier du turboréacteur de la figure 3;
- la figure 5A représente une première étape d'alimentation en huile de lubrification du palier de la figure 4 ;
- la figure 5B représente une deuxième étape d'alimentation en huile de lubrification du palier de la figure 4 ;
- la figure 5C représente une troisième étape d'alimentation en huile de lubrification du palier de la figure 4 ;
- la figure 6 est une vue en coupe axiale du palier du turboréacteur de la figure 4 lors de la mise en cône de l'arbre haute pression du turboréacteur ;
- la figure 7 est une vue en coupe axiale d'une première variante d'un palier d'un turboréacteur selon l'invention ; et
- la figure 8 est une vue en coupe axiale d'une deuxième variante d'un palier d'un turboréacteur selon l'invention.

L'invention va être présentée pour la suite pour un turboréacteur mais elle s'applique à toute turbomachine aussi bien pour la propulsion d'un aéronef que pour la production d'électricité.

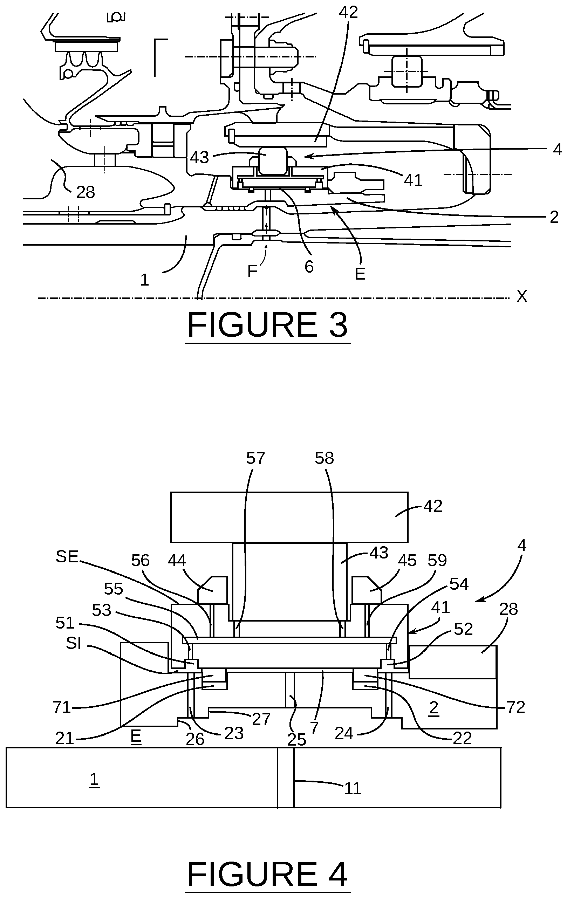

En référence à la figure 3, de manière similaire à un turboréacteur selon l'art antérieur tel que présenté sur la figure 1, un turboréacteur selon l'invention comporte un premier arbre basse pression 1 et un deuxième arbre haute pression 2 qui sont coaxiaux l'un par rapport à l'autre et s'étendent selon l'axe X du turboréacteur. Les arbres basse pression 1 et haute pression 2 sont montés rotatifs l'un par rapport à l'autre et sont séparés par un espace de lubrification E, connu de l'homme du métier sous la dénomination « entrefer », l'arbre basse pression 1 étant monté dans l'arbre haute pression 2.

Le turboréacteur comporte en outre un palier 4 de guidage desdits arbres basse pression 1 et haute pression 2 qui comprend une première bague intérieure 41 et une deuxième bague extérieure 42 enserrant des organes roulants, ici, des rouleaux 43. Comme représenté sur la figure 3, le palier 4 est monté extérieurement à l'arbre haute pression 2. A cet effet, l'extrémité aval de l'arbre basse pression 1 comporte une goulotte annulaire venant envelopper l'extrémité aval de l'arbre haute pression 2 de manière à ce que le palier de guidage 4 soit placé intérieurement à l'arbre basse pression 1 et extérieurement à l'arbre haute pression 2. Autrement dit, la bague extérieure 42 du palier 4 est solidaire d'une partie de l'arbre basse pression 1 tandis que la bague intérieure 41 du palier 4 est solidaire d'une partie de l'arbre haute pression 2 qui est désignée classiquement « tourillon haute pression » par l'homme du métier.

En référence à la figure 4 représentant le palier 4 de manière détaillée, la bague intérieure 41 du palier 4 comporte des canaux 51-59 permettant d'acheminer de l'huile de lubrification depuis la surface intérieure SI de la bague intérieure 41 vers sa surface extérieure SE. De manière similaire au turboréacteur de la figure 1, le turboréacteur selon l'invention comporte des moyens d'amenée d'un flux d'huile de lubrification F pour lubrifier le palier de guidage 4. Dans cet exemple, les moyens d'amenée se présentent sous la forme de gicleurs mais il va de soi qu'ils pourraient se présenter sous des formes diverses.

Les moyens d'amenée du flux d'huile de lubrification F sont disposés intérieurement à l'arbre basse pression 1. Ainsi, pour lubrifier le palier de guidage 4, le flux d'huile de lubrification F doit traverser successivement l'arbre basse pression 1, l'espace de lubrification E et l'arbre haute pression 2. A cet effet, comme représenté sur la figure 4, l'arbre basse pression 1 comporte des orifices traversants de distribution radiaux 11 agencés pour distribuer le flux d'huile de lubrification F depuis les moyens d'amenée vers l'espace de lubrification E. De manière similaire, l'arbre haute pression 2 comporte des orifices traversants de distribution radiaux 23-25 agencés pour distribuer le flux d'huile de lubrification F dans les canaux 51-59 de la bague intérieure 41 du palier 4 et ainsi lubrifier les rouleaux 43 et les cages 44-45 du palier 4.

Selon l'invention, la bague intérieure 41 du palier 4 est montée flottante sur l'arbre haute pression 2 par l'intermédiaire d'un film fluide amortisseur 6 de manière à ce que les bagues intérieure 41 et extérieure 42 du palier 4 demeurent parallèles au cours du fonctionnement du turboréacteur. Le film fluide amortisseur 6 permet ainsi de compenser les défauts d'orientation de l'arbre haute pression, par exemple, lorsque ce dernier se déforme et se « met en cône ».

Comme représenté en détails sur la figure 4, le palier 4 comporte une bague extérieure 42 solidaire de l'arbre basse pression 1 et une bague intérieure 41 montée sur l'arbre haute pression 2, les bagues 41, 42 enserrant des rouleaux 43 qui sont bloqués longitudinalement par des épaulements de la bague intérieure et angulairement par une cage annulaire amont 44 et une cage annulaire aval 45 qui sont montées sur la surface extérieure de la bague intérieure 41.

Une chambre d'amortissement 7 est définie entre la bague intérieure 41 du palier 4 et l'arbre haute pression 2 pour recevoir de l'huile de lubrification et former un film fluide amortisseur 6 interposé entre le palier 4 et l'arbre haute pression 2. De manière plus précise, la chambre d'amortissement 7 est délimitée radialement par la surface intérieure SI de la bague intérieure 41 d'une part et la surface extérieure de l'arbre haute pression 2 d'autre part. Le turboréacteur comporte en outre des moyens d'étanchéité amont 71 et aval 72 se présentant sous la forme de segments d'étanchéité annulaires 71, 72, s'étendant radialement, qui sont distincts de la bague intérieure 41 du palier 4 et de l'arbre haute pression 2. Comme représenté sur la figure 4, les segments d'étanchéité annulaires 71, 72 permettent de délimiter longitudinalement la chambre d'amortissement 7 et ainsi emprisonnent de manière étanche l'huile de lubrification du film fluide amortisseur 6. Les segments d'étanchéité 71, 72 permettent d'améliorer le fonctionnement mais ne sont pas nécessaires au fonctionnement du palier 4.

Dans cet exemple, chaque segment d'étanchéité annulaire 71, 72 possède une section de fuite calibrée de manière à permettre à l'huile de lubrification de sortir de la chambre d'amortissement 7. Chaque segment d'étanchéité annulaire 71, 72 comprend dans cet exemple une fente radiale (non représentée) s'étendant sur une plage angulaire de l'ordre de 1° entre les deux extrémités du segment 71, 72. Ainsi, au cours du fonctionnement, l'huile de lubrification du film amortisseur 6 est renouvelée dans la chambre d'amortissement 7, le flux d'huile F pénétrant dans la chambre d'amortissement 7 par un orifice traversant 25 de l'arbre haute pression 2 et s'échappant par les fentes radiales des segments 71, 72.

Toujours en référence à la figure 4, l'arbre haute pression 2 comporte au moins deux logements radiaux 21, 22 formés dans la surface extérieure de l'arbre haute pression 2 et agencés pour loger respectivement les segments d'étanchéité annulaires 71, 72. Ainsi les segments d'étanchéité annulaires 71, 72 sont capables de se translater radialement dans leurs logements 71, 72 pour permettre le montage de la bague intérieure 41 du palier 4 sur l'arbre haute pression 2. En fonctionnement, les segments d'étanchéité annulaires 71, 72 sont appuyés sur la surface intérieure SI de la bague intérieure 41 sous l'effet des forces centrifuges pour délimiter la chambre d'amortissement 7.

Comme représenté sur la figure 4, chaque segment d'étanchéité 71, 72 possède une section axiale sensiblement rectangulaire et peut ainsi se translater dans son logement 21, 22 dont la section axiale est également rectangulaire. Chaque segment d'étanchéité 71, 72 est ainsi libre d'entrer en rotation selon l'axe X du turboréacteur dans son logement 21, 22. Les couples résistants liés aux frottements entre les segments d'étanchéité annulaire 71, 72 et l'arbre haute pression 2 d'une part et la surface interne de la bague intérieure 41 d'autre part sont supérieurs au frottement de roulement des rouleaux 43. Cela peut avantageusement permettre de ne pas recourir à un dispositif anti rotation entre la bague intérieure 41 et l'arbre haute pression 2.

Comme indiqué précédemment, la bague intérieure 41 du palier 4 comporte en outre des canaux 51-59 d'alimentation en huile qui relient la surface intérieure SI de la bague intérieure 41 à sa surface extérieure SE pour lubrifier et refroidir les rouleaux 43 du palier 4. Etant donné que le film fluide amortisseur 6 est aligné radialement avec le rouleau 43 du palier 4 pour optimiser l'amortissement, il n'est plus possible de former des canaux radiaux alignés radialement avec le rouleau 43 dans la bague intérieure 41 comme cela était réalisé pour les paliers de l'art antérieur.

Selon l'invention, la bague intérieure 41 possède, entre ses extrémités amont et aval, une partie centrale dont la surface intérieure SI est pleine et continue, c'est-à-dire, dénuée d'orifices afin de former une paroi radialement extérieure de la chambre d'amortissement 7.

Pour permettre néanmoins l'acheminement de l'huile de lubrification F à travers la bague intérieure 41, en référence à la figure 4, cette dernière comporte au moins :
- une gorge annulaire amont 51 et une gorge annulaire aval 52 formées dans la surface intérieure SI de la bague intérieure 41,
- un canal interne longitudinal 55,
- un premier canal radial amont 53 reliant la gorge annulaire amont 51 au canal interne longitudinal 55,
- un premier canal radial aval 54 reliant la gorge annulaire aval 52 au canal interne longitudinal 55,
- un deuxième canal radial amont de lubrification de cage 56 reliant le canal interne longitudinal 55 à la surface extérieure SE de la bague intérieure 41 située sous la cage amont 44,
- un deuxième canal radial amont de lubrification de rouleau 57 reliant le canal interne longitudinal 55 à la surface extérieure SE de la bague intérieure 41 située sous une partie amont du rouleau 43,
- un deuxième canal radial aval de lubrification de rouleau 58 reliant le canal interne longitudinal 55 à la surface extérieure SE de la bague intérieure 41 située sous une partie aval du rouleau 43, et
- un deuxième canal radial aval de lubrification de cage 59 reliant le canal interne longitudinal 55 à la surface extérieure SE de la bague intérieure 41 située sous la cage aval 45.

De tels canaux 51-59 permettent de collecter le flux d'huile F aux extrémités latérales de la surface intérieure SI de la bague intérieure 41 et de le répartir sur la surface extérieure SE pour lubrifier les cages 44, 45 et les rouleaux 43.

Pour alimenter d'une part la chambre d'amortissement 7 et d'autre part les canaux 51-59 de la bague intérieure 41, l'arbre haute pression 2 comporte des orifices traversants radiaux amont 23 alignés avec la gorge annulaire amont 51 de la bague intérieure 41, des orifices traversants radiaux aval 24 alignés avec la gorge annulaire aval 52 de la bague intérieure 41 et des orifices traversants radiaux centraux 25 débouchant dans la chambre d'amortissement 7.

L'arbre haute pression 2 comporte en outre une baignoire annulaire principale 26 et une baignoire annulaire auxiliaire 27 creusées radialement dans la surface intérieure de l'arbre haute pression 2. Comme représenté sur la figure 4, la baignoire auxiliaire 27 est creusée dans la baignoire principale 26 afin de former plusieurs niveaux et permettre une alimentation séquentielle des orifices traversants 23-25 de l'arbre haute pression 2 lors de la mise en fonctionnement du turboréacteur comme cela sera décrit par la suite. La baignoire principale 26 présente une dimension longitudinale supérieure à la baignoire auxiliaire 27. Ainsi, les orifices traversants centraux 25 débouchent dans la baignoire auxiliaire 27 tandis que les orifices traversants amont 23 et aval 24 débouchent dans la baignoire principale 26.

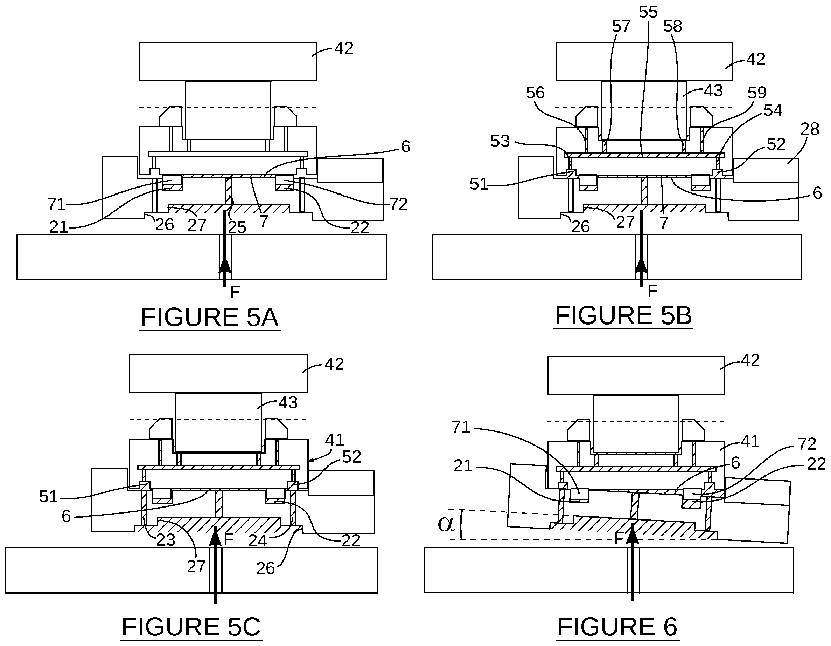

Un procédé d'alimentation en huile de lubrification F d'un palier 4 d'un turboréacteur selon l'invention va être maintenant présenté en référence aux figures 5A-5C.

En référence à la figure 5A représentant une première étape d'alimentation en huile, l'huile de lubrification F (représentée en traits hachurés sur les figures 5A-5C) s'accumule dans la baignoire auxiliaire 27 de forme annulaire sous l'effet des forces centrifuges et s'écoule via l'orifice traversant central 25 de l'arbre haute pression 2 pour remplir la chambre d'amortissement 7. Le flux d'huile de lubrification F exerce une pression sur les segments d'étanchéité annulaires amont 71 et aval 72 qui sont poussés respectivement en amont et en aval. Comme représenté sur la figure 5A, l'huile de lubrification F remplit les logements 21, 22 des segments d'étanchéité 71, 72 formés dans la surface extérieure de l'arbre haute pression 2. La chambre d'amortissement 7 est alors remplie d'huile de lubrification F sous pression pour former un film fluide amortisseur 6 entre l'arbre haute pression 2 et le palier 4. Suite à cette première étape d'alimentation en huile, le film fluide amortisseur 6 est opérationnel.

En référence à la figure 5B représentant une deuxième étape d'alimentation en huile, au fur et à mesure de l'alimentation en huile de lubrification, l'huile de lubrification fuit hors de la chambre d'amortissement 7 depuis la section de fuite calibrée des segments d'étanchéité 71, 72. Sous l'effet des forces centrifuges, l'huile de lubrification F issue de la chambre d'amortissement 7 pénètre dans les gorges annulaires 51, 52 de la bague intérieure 41 pour être collectée puis conduite dans les deuxièmes canaux de lubrification 56-59 via les premiers canaux radiaux 53-54 et le canal longitudinal interne 55. Suite à cette deuxième étape d'alimentation en huile, les canaux 51-59 de la bague intérieure 41 sont remplis d'huile de lubrification mais le débit demeure faible car il correspond au débit de fuite de la chambre d'amortissement 7. Cette étape permet l'amorçage de la lubrification du palier 4.

En référence à la figure 5C représentant une troisième étape d'alimentation en huile, l'huile de lubrification déborde hors de la baignoire auxiliaire 27 pour s'accumuler dans la baignoire principale 26 ce qui permet à l'huile de lubrification F d'alimenter directement les gorges annulaires 51, 52 de la bague intérieure 41 via les orifices traversants amont 23 et aval 24 de l'arbre haute pression 2. Le débit d'huile issue des orifices traversants amont 23 et aval 24 de l'arbre haute pression 2 permet d'alimenter les canaux 51-59 de la bague intérieure 41 pour refroidir et lubrifier le palier 4 de manière optimale.

En référence maintenant à la figure 6, au cours du fonctionnement du turboréacteur, l'arbre haute pression 2 se déforme et se « met en cône » sous les effets conjugués des forces centrifuges et des dilatations thermiques, la partie amont de l'arbre haute pression 2 se déplaçant radialement vers l'extérieur et forme un angle α avec l'axe X du turboréacteur. Du fait de la présence du film fluide amortisseur 6, il existe un jeu entre la bague intérieure 41 du palier 4 et l'arbre haute pression 2. Grâce à ce jeu, la déformation de l'arbre haute pression 2 est compensée par le film fluide amortisseur 6, l'orientation de la bague intérieure 41 du palier 4 n'étant pas modifiée comme représenté sur la figure 6. Le parallélisme entre les bagues intérieure 41 et extérieure 42 du palier 4 étant conservée, la lubrification du palier 4 par le flux d'huile de lubrification F demeure optimale.

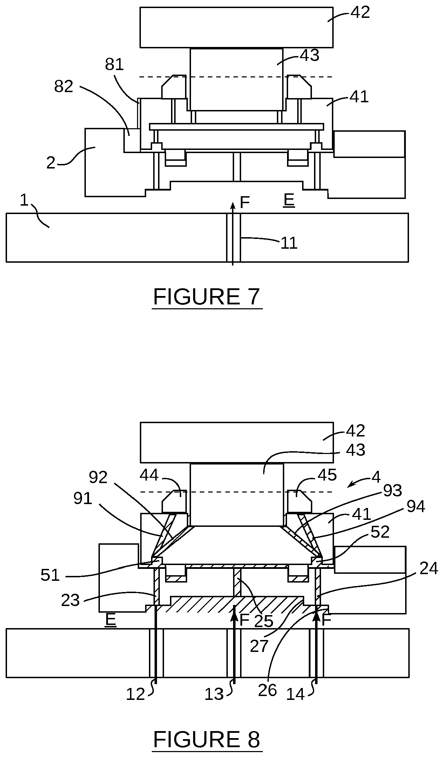

De manière préférée, la bague intérieure 41 du palier 4 comporte des moyens de solidarisation en rotation de la bague intérieure 41 et de l'arbre haute pression 2 ce qui permet d'augmenter la sécurité de l'ensemble tout en autorisant un jeu radial entre la bague intérieure 41 et l'arbre haute pression 2 pour compenser la déformation de l'arbre haute pression 2. De préférence, les moyens de solidarisation se présentent sous la forme d'ergots ou de créneaux 81 coopérant avec des créneaux 82 de l'arbre haute pression 2 comme représenté sur la figure 7.

L'invention a été précédemment présentée pour une bague intérieure 41 de palier 4 comportant un ensemble de canaux radiaux 53-54, 56-59 et un canal longitudinal interne 55. De manière alternative, lorsque l'épaisseur radiale de la bague intérieure 41 du palier 4 n'est pas suffisante pour former un canal longitudinal interne 55, la bague intérieure 41 peut comporter des canaux obliques 91-94 comme représenté sur la figure 8.

Cette variante de l'invention est décrite en référence à la figure 8. Les références utilisées pour décrire les éléments de structure ou fonction identique, équivalente ou similaire à celles des éléments de la figure 4 sont les mêmes, pour simplifier la description. D'ailleurs, l'ensemble de la description de la bague intérieure de la figure 4 n'est pas reprise, cette description s'appliquant aux éléments de la figure 8 lorsqu'il n'y a pas d'incompatibilités. Seules les différences notables, structurelles et fonctionnelles, sont décrites.

Ainsi, en référence à la figure 8, la bague intérieure 41 comporte :
- une gorge annulaire amont 51 et une gorge annulaire aval 52 formées dans la surface intérieure SI de la bague intérieure 41,
- un premier canal oblique amont 91 reliant la gorge annulaire amont 51 à la surface extérieure SE de la bague intérieure 41 située sous la cage amont 44,
- un deuxième canal oblique amont 92 reliant la gorge annulaire amont 51 à la surface extérieure SE de la bague intérieure 41 située sous une partie amont du rouleau 43,
- un premier canal oblique aval 93 reliant la gorge annulaire aval 52 à la surface extérieure SE de la bague intérieure 41 située sous une partie aval du rouleau 43, et
- un deuxième canal oblique aval 94 reliant la gorge annulaire aval 52 à la surface extérieure SE de la bague intérieure 41 située sous la cage aval 45.

Il a été précédemment présenté un arbre basse pression 1 comportant des orifices traversants 11 répartis dans un unique plan transversal à l'axe X du turboréacteur. Il va de soi que l'arbre basse pression 1 peut comporter des orifices traversants 12, 13, 14 répartis selon plusieurs plans transversaux décalés longitudinalement (par exemple trois comme représenté sur la figure 8) de manière à mieux répartir l'huile de lubrification F dans les orifices traversants 23, 24, 25 de l'arbre haute pression 2.

## Revendications

1. Turbomachine comportant au moins un arbre (2) et au moins un palier (4) de guidage en rotation dudit arbre (2) autour d'un axe (X) de la turbomachine, le palier (4) comportant une première bague (41) radialement intérieure et une deuxième bague (42) radialement extérieure enserrant des organes roulants (43), turbomachine **caractérisée par le fait que** la première bague (41) est montée flottante sur ledit arbre (2) par l'intermédiaire d'un film fluide amortisseur (6) de manière à amortir les défauts d'orientation de l'arbre au cours de son fonctionnement, la turbomachine comportant des moyens d'étanchéité amont (71) et aval (72) agencés pour former une chambre d'amortissement (7) délimitée radialement par la première bague (41) et ledit arbre (2) et longitudinalement par les moyens d'étanchéité amont (71) et aval (72).

2. Turbomachine selon la revendication 1, dans laquelle ledit arbre (2) comporte au moins un logement annulaire (21, 22) agencé pour loger les moyens d'étanchéité amont (71) et/ou aval (72).

3. Turbomachine selon la revendication 2, dans laquelle, la première bague (41) comportant une surface extérieure (SE) tournée vers les organes roulant (43) du palier (4) et une surface intérieure (SI) opposée à la surface extérieure (SE), la surface intérieure (SI) de la première bague (41) comportant au moins une gorge annulaire amont (51) et une gorge annulaire aval (52), la surface intérieure (SI) de la première bague (41) qui s'étend entre les gorges annulaires amont (51) et aval (52) est pleine.

4. Turbomachine selon l'une des revendications 1 à 3, dans laquelle, la première bague comportant une surface extérieure (SE) tournée vers les organes roulant (43) du palier (4) et une surface intérieure (SI) opposée à la surface extérieure (SE), la première bague (41) comporte :
- au moins un canal longitudinal interne (55) s'étendant dans la première bague (41),
- des premiers canaux (53-54) reliant le canal longitudinal (55) à la surface intérieure (SI) de la première bague (41) et
- des deuxièmes canaux (56-59) reliant le canal longitudinal (55) à la surface extérieure (SE) de la première bague (41).

5. Turbomachine selon les revendications 3 et 4, dans laquelle les premiers canaux (53-54) débouchent dans au moins une des gorges annulaires (51, 52).

6. Turbomachine selon l'une des revendications 1 à 3, dans laquelle, la première bague comportant une surface extérieure (SE) tournée vers les organes roulant (43) du palier (4) et une surface intérieure (SI) opposée à la surface extérieure (SE), la première bague (41) comporte au moins des canaux de liaison (91-94) s'étendant obliquement par rapport à un plan transversal défini par rapport à l'axe (X) de la turbomachine, les canaux de liaison (91-94) reliant la surface intérieure (SI) de la première bague (41) à sa surface extérieure (SE).

7. Turbomachine selon l'une des revendications 1 à 6, dans laquelle, l'arbre (2) comportant une baignoire principale annulaire (26) formée radialement dans la surface intérieure de l'arbre (2) et une baignoire auxiliaire annulaire (27) formée radialement dans la surface intérieure de la baignoire principale (6), l'arbre comporte :
- des orifices (25) d'alimentation du film fluide amortisseur (6) qui relient la baignoire auxiliaire (27) à la surface extérieure de l'arbre (2), et
- des orifices (23, 24) de lubrification du palier (4) qui relient la baignoire principale (26) à la surface extérieure de l'arbre (2).

8. Turbomachine selon les revendications 1 à 7, dans laquelle, la turbomachine comportant un arbre de turbine basse pression (1) et un arbre de turbine haute pression (2), la première bague (41) est une bague intérieure d'un palier interarbre (4) montée sur l'arbre de turbine haute pression (2).

9. Procédé d'alimentation en huile de lubrification d'une turbomachine comportant au moins un arbre (2) et au moins un palier (4) de guidage en rotation dudit arbre (2) autour d'un axe (X) de la turbomachine, le palier (4) comportant une première bague (41) radialement intérieure et une deuxième bague (42) radialement extérieure enserrant des organes roulants (43), la première bague (41) étant montée extérieurement audit arbre (2) et comprenant des canaux de lubrification (51-59) des organes roulants (43), une chambre d'amortissement (7) étant définie entre la première bague (41) et ledit arbre (2), procédé dans lequel, lors de la mise en marche de la turbomachine :
- un flux d'huile de lubrification (F) alimente la chambre d'amortissement (7) pour former un film fluide amortisseur (6) entre la première bague (41) et l'arbre (2), puis
- le flux d'huile de lubrification (F) alimente les canaux de lubrification (51-59) des organes roulants (43).

## Patentansprüche

1. Turbomaschine mit mindestens einer Welle (2) und mindestens einem Lager (4) zur Rotationsführung der Welle (2) um eine Achse (X) der Turbomaschine, wobei das Lager (4) einen ersten radial inneren Ring (41) und einen zweiten radial äußeren Ring (42) umfasst, die Rollorgane (43) umschließen, wobei die Turbomaschine **dadurch gekennzeichnet ist, dass** der erste Ring (41) schwebend auf der Welle (2) mittels eines Dämpfungsfluidfilms (6) so angebracht ist, um die Ausrichtungsfehler der Welle während ihres Betriebs zu dämpfen, wobei die Turbomaschine stromaufwärts gelegene (71) und stromabwärts gelegene (72) Dichtungsmittel umfasst, die eingerichtet sind, eine Dämpfungskammer (7) zu bilden, die radial von dem ersten Ring (41) und der Welle (2) und in Längsrichtung durch die stromaufwärts gelegenen (71) und stromabwärts gelegenen (72) Dichtungsmittel begrenzt ist.

2. Turbomaschine nach Anspruch 1, wobei die Welle (2) mindestens eine ringförmige Ausnehmung (21, 22) umfasst, die eingerichtet ist, um die stromaufwärts gelegenen (71) und / oder stromabwärts gelegenen (72) Dichtungsmittel aufzunehmen.

3. Turbomaschine nach Anspruch 2, wobei der erste Ring (41) eine äußere Fläche (SE), die den Rollorganen (43) des Lagers (4) zugewandt ist, und eine innere Fläche (SI) gegenüber der Äußeren Fläche (SE) umfasst, wobei die innere Fläche (SI) des ersten Rings (41) mindestens eine stromaufwärts gelegene ringförmige Nut (51) und eine stromabwärts gelegene ringförmige Nut (52) umfasst, wobei die innere Fläche (SI) des ersten Rings (41), die sich zwischen der stromaufwärts gelegenen ringförmigen (51) und stromabwärts gelegenen (52) Nut erstreckt, voll ist.

4. Turbomaschine nach einem der Ansprüche 1 bis 3, wobei der erste Ring eine äußere Fläche (SE), die den Rollorgan (43) des Lagers (4) zugewandt ist, und eine Innere Fläche (SI) gegenüber der äußeren Fläche (SE) umfasst, wobei der erste Ring (41) umfasst:
- zumindest einen inneren Längskanal (55), der sich in dem ersten Ring (41) erstreckt,
- erste Kanäle (53-54), die den Längskanal (55) mit der inneren Fläche (SI) des ersten Rings (41) verbinden und
zweite Kanäle (56-59), die den Längskanal (55) mit der äußeren Fläche (SE) des ersten Rings (41) verbinden.

5. Turbomaschine nach den Ansprüchen 3 und 4, wobei die ersten Kanäle (53-54) in mindestens einer der Ringnuten (51, 52) münden.

6. Turbomaschine nach einem der Ansprüche 1 bis 3, wobei der erste Ring eine äußere Fläche (SE), die den Rollorganen (43) des Lagers (4) zugewandt ist, und eine Innere Fläche (SI) gegenüber der äußeren Fläche (SE) umfasst, wobei der erste Ring (41) mindestens Verbindungskanäle (91-94) umfasst, die sich schräg mit Bezug auf eine transversale Ebne erstrecken, die mit Bezug auf die Achse (X) der Turbomaschine definiert ist, wobei die Verbindungskanäle (91-94) die innere Fläche (SI) des ersten Rings (41) mit seiner äußeren Fläche (SE) verbinden.

7. Turbomaschine nach einem der Ansprüche 1 bis 6, wobei die Welle (2) eine ringförmige Hauptwanne (26), die radial in der inneren Fläche der Welle (2) ausgebildet ist, und eine ringförmige Hilfswanne (27) umfasst, die radial in der inneren Fläche der Hauptwanne (6) ausgebildet ist, wobei die Welle umfasst:
- Öffnungen (25) der Einspeisung des Dämpfungsfluidfilms (6), welche die Hilfswanne (27) mit der Äußeren Fläche der Welle (2) verbinden, und
- Öffnungen (23, 24) zur Schmierung des Lagers (4), welche die Hauptwanne (26) mit der Äußeren Fläche der Welle (2) verbinden.

8. Turbomaschine nach den Ansprüchen 1 bis 7, wobei die Turbomaschine eine Niederdruckturbinenwelle (1) und eine Hochdruckturbinenwelle (2) umfasst, wobei der erste Ring (41) ein Innenring eines Zwischenwellenlagers (4) ist, der auf der Hochdruckturbinenwelle (2) montiert ist.

9. Verfahren zur Versorgung einer Turbomaschine mit Schmieröl, die mindestens eine Welle (2) und mindestens ein Lager (4) zur Rotationsführung der Welle (2) um eine Achse (X) der Turbomaschine umfasst, wobei das Lager (4) einen ersten radial inneren Ring (41) und einen zweiten radial äußeren Ring (42) umfassen, die Rollorgane (43) umschließen, wobei der erste Ring (41) außen an der Welle (2) angebracht ist und Schmierkanäle (51-59) der Rollorgane (43) umfasst, wobei eine Dämpfungskammer (7) zwischen dem ersten Ring (41) und der Welle (2) definiert ist, wobei in dem Verfahren während der Inbetriebnahme der Turbomaschine:
- ein Schmierölstrom (F) in die Dämpfungskammer (7) eingespeist wird, um einen Dämpfungsfluidfilm (6) zwischen dem ersten Ring (41) und der Welle (2) zu bilden, dann
- der Schmierölstrom (F) in die Schmierkanäle (51-59) der Rollorgane (43) eingespeist wird.

## Claims

1. Turbine engine comprising at least one shaft (2) and at least one bearing (4) for rotatably guiding said shaft (2) about an axis (X) of the turbine engine, the bearing (4) comprising a first radially inner ring (41) and a second radially outer ring (42) enclosing rolling members (43), said turbine engine being **characterised in that** the first ring (41) is floatingly mounted on said shaft (2) via a fluid damping film (6) so as to damp the orientation defects of the shaft during the operation thereof, the turbine engine comprising upstream (71) and downstream (72) sealing means arranged to form a damping chamber (7) which is delimited radially by the first ring (41) and said shaft (2) and longitudinally by the upstream (71) and downstream (72) sealing means.

2. Turbine engine according to claim 1, wherein said shaft (2) comprises at least one annular compartment (21, 22) arranged to house the upstream(71) and/or downstream (72) sealing means.

3. Turbine engine according to claim 2, wherein, since the first ring (41) comprises an outer surface (SE) turned towards the rolling member (43) of the bearing (4) and an inner surface (SI) opposite the outer surface (SE), the inner surface (SI) of the first ring (41) comprising at least an upstream annular groove (51) and a downstream annular groove (52), the inner surface (SI) of the first ring (41) which extends between the upstream (51) and downstream (52) annular grooves is solid.

4. Turbine engine according to one of claims 1 to 3, wherein, since the first ring comprises an outer surface (SE) turned towards the rolling members (43) of the bearing (4) and an inner surface (SI) opposite the outer surface (SE), the first ring (41) comprises:
- at least one internal longitudinal channel (55) extending in the first ring (41),
- first channels (53-54) connecting the longitudinal channel (55) to the inner surface (SI) of the first ring (41) and
- second channels (56-59) connecting the longitudinal channel (55) to the outer surface (SE) of the first ring (41).

5. Turbine engine according to claims 3 and 4, wherein the first channels (53-54) discharge into at least one of the annular grooves (51-52).

6. Turbine engine according to one of claims 1 to 3, wherein, since the first ring comprises an outer surface (SE) turned towards the rolling members (43) of the bearing (4) and an inner surface (SI) opposite the outer surface (SE), the first ring (41) comprises at least connecting channels (91-94) extending diagonally in relation to a transverse plane defined in relation to the axis (X) of the turbine engine, the connecting channels (91-92) connecting the inner surface (SI) of the first ring (41) to the outer surface (SE) thereof.

7. Turbine engine according to one of claims 1 to 6, wherein, since the shaft (2) comprises a main annular trough (26) formed radially in the inner surface of the shaft (2) and an auxiliary annular trough (27) formed radially in the inner surface of the main trough (6), the shaft comprises:
- holes (25) for supplying the fluid damping film (6) which connect the auxiliary trough (27) to the outer surface of the shaft (2), and
- holes (23, 24) for lubricating the bearing (4) which connect the main trough (26) to the outer surface of the shaft (2).

8. Turbine engine according to claims 1 to 7, wherein, since the turbine engine comprises a low-pressure turbine shaft (1) and a high-pressure turbine shaft (2), the first ring (41) is an inner ring of an intershaft bearing (4) mounted on the high-pressure turbine shaft (2).

9. Method for supplying lubrication oil to a turbine engine comprising at least one shaft (2) and at least one bearing (4) for rotatably guiding said shaft (2) about an axis (X) of the turbine engine, the bearing (4) comprising a first radially inner ring (41) and a second radially outer ring (42) enclosing rolling members (43), the first ring (41) being mounted outside said shaft (2) and comprising channels (51-59) for lubricating the rolling members (43), a damping chamber (7) being defined between the first ring (41) and said shaft (2), wherein, in said method, when the turbine engine is switched on:
- a flow (F) of lubrication oil is supplied to the damping chamber (7) to form a fluid damping film (6) between the first ring (41) and the shaft (2), then
- the flow (F) of lubrication oil is supplied to the lubrication channels (51-59) of the rolling members (43).
